(19) Europäisches Patentamt
European Patent Office
Office européen des brevets

(11) **EP 2 537 723 B1**

(12) **EUROPEAN PATENT SPECIFICATION**

(45) Date of publication and mention
of the grant of the patent:
**25.06.2014 Bulletin 2014/26**

(51) Int Cl.:
***B60T 8/172*** *(2006.01)*

(21) Application number: **12173043.6**

(22) Date of filing: **21.06.2012**

(54) **Method and apparatus for determining road surface condition**

Verfahren und Vorrichtungen zum Bestimmen des Oberflächenzustands einer Straße

Procédé et appareil permettant de déterminer l'état d'une surface de route

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **24.06.2011 JP 2011140943**

(43) Date of publication of application:
**26.12.2012 Bulletin 2012/52**

(73) Proprietors:
• **Kabushiki Kaisha Bridgestone
Chuo-ku,
Tokyo 104-8340 (JP)**
• **Inter-University Research Institute Corporation,
Research Organization of Information and
System
Tokyo 106-0047 (JP)**

(72) Inventors:
• **Hanatsuka, Yasushi
Tokyo 187-8531 (JP)**
• **Higuchi, Tomoyuki
Tokyo 190-8562 (JP)**
• **Matsui, Tomoko
Tokyo 106-0047 (JP)**

(74) Representative: **Waldren, Robin Michael et al
Marks & Clerk LLP
90 Long Acre
London
WC2E 9RA (GB)**

(56) References cited:
**EP-A1- 1 897 706       DE-A1- 10 320 809
DE-A1- 19 540 722**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Field of the Invention

The present invention relates to a method and an apparatus for determining the condition of a road surface on which a vehicle is running, and more particularly to a method for determining a road surface condition using only the data of a time-series waveform of the vibrations of a moving tire.

2. Description of the Related Art

There have been proposed methods for estimating a road surface condition by detecting the vibrations of a moving tire, such as one disclosed in WO 2006/135090 A1. In such a method, a time-series waveform of detected tire vibrations is divided into a plurality of regions, such as "pre-leading-edge region, contact patch region, post-trailing-edge region" or "pre-leading-edge region, leading-edge region, contact patch region, trailing-edge region, post-trailing-edge region". And the vibration level in a frequency band where the frequency level changes markedly with the changing road surface condition and the vibration level in a frequency band where it does not change much with the road surface condition, such as seen in the vibration component in a low-frequency band and the vibration component in a high-frequency band in the pre-leading-edge region and the contact patch region, are extracted from each of the regions. Then the condition of the road surface on which the vehicle is running is estimated from the ratio between these vibration levels.

In the conventional method as described above, however, it has been necessary to set a starting point of a specific time position based on a peak position, such as the trailing edge (tire disengagement) position appearing in a time-series waveform of tire vibrations and determine the time widths of respective regions using the wheel speed. As a result, the accuracy in setting the region widths has not been necessarily adequate.

Also, with tires of different sizes, it has been necessary to change the setting of the region widths for each tire size since such tires can vary in contact patch length from one to another.

The present invention has been made to solve the above-described problems, and an object thereof is to provide a method and apparatus for determining a road surface condition by dividing a time-series waveform of tire vibrations without detection of peak positions or measurement of wheel speed, thereby adding robustness against changes in tire size in the determination of road surface condition.

DE 103 20 809 discloses a method of monitoring the movements of a vehicle using a number of sensors on the vehicle. These sensors can measure noise. Measured data is analysed using a pattern recognition method.

SUMMARY OF THE INVENTION

A first aspect of the invention provides a method for determining a road surface condition, from a vibration of a moving tire (20) detected by using a vibration detecting areas (11) provided with a tire, which includes the steps of detecting vibrations of a moving tire, extracting time-series waveforms of tire vibrations in predetermined time widths from the tire vibrations detected, calculating feature vectors for the time-series waveforms, calculating likelihoods of the feature vectors respectively for a plurality of hidden Markov models (HMMS) structured to represent predetermined road surface conditions, and comparing the likelihoods calculated respectively for the plurality of hidden Markov models with one another and determining a road surface condition corresponding to the hidden Markov model showing the highest likelihood to be the condition of the road surface on which the tire is running, wherein each of the feature vectors consists of vibration levels in specific frequency bands or a function of the vibration levels and in which each of the hidden Markov models has at least four different states.

Note that the "four different states" mentioned above are the two states of "initial" and "final" states plus two states out of the five states of "pre-leading-edge", "leading-edge", "pre-trailing-edge", "trailing-edge", and "post-trailing-edge" states.

As mentioned above, the hidden Markov models (hereinafter referred to as HMMs) are applied to the time-series waveform of tire vibrations. Therefore, the waveform of tire vibrations can be divided into a plurality of characteristic states without resorting to detection of the peak positions or measurement of the wheel speed. And a road surface condition is determined based on the likelihoods calculated using the output probability and the state transition probability of the feature vectors in the respective states. Hence, the accuracy in determining a road surface condition can be improved markedly.

Also, the application of the HMMs allows the determination of a road surface condition irrespective of the contact patch length. This feature adds robustness against changes in tire size to the present method for determining a road surface condition.

The feature vector may consist of one, two or more, or all of vibration levels in specific frequency bands (Fourier coefficients) when a Fourier transform is performed on the time-series waveform, vibration levels in specific frequency bands obtained by passing the time-series waveforms through bandpass filters, time-varying dispersions of the vibration levels in specific frequency bands, and frequency cepstral coefficients of the time-series waveform.

The differences in tire vibrations relative to the road surface conditions appear in the time-series waveform of tire vibrations. However, in an embodiment, the values dependent on frequencies are used for the feature vectors so that there may emerge clearer differences in likelihood. As a result, the accuracy in determining a road surface condition can be further improved.

Each of the hidden Markov models for the respective road surface conditions may have seven states (two states of "initial" and "final" states and five states of "pre-leading-edge", "leading-edge", "pre-trailing-edge", "trailing-edge", and "post-trailing-edge" states).

In this manner, a time-series waveform of tire vibrations is represented by HMMs each having seven states, so that there will be clearer differences in the distribution of output probabilities of the feature vectors between the states. As a result, the accuracy in determining a road surface condition can be further improved.

The hidden Markov models for the respective road surface conditions may include an extra-road-surface hidden Markov model, structured from a vibration waveform which is a vibration waveform other than that of the contact patch and whose vibration level is lower than a predetermined background level, and intra-road-surface hidden Markov models, structured from vibration waveforms which are vibration waveforms of the contact patch or those before and after the contact patch and whose vibration level is equal to or higher than the predetermined background level, in which the extra-road-surface hidden Markov model is provided either before or after or both before and after the intra-road-surface hidden Markov models.

Accordingly, if a model or models covering a region or regions either before or after or both before and after the contact patch where the vibration level is low are added, the accuracy in determining a road surface condition can be further improved.

A second aspect of the invention provides an apparatus for determining a road surface condition, which includes a tire vibration detecting unit disposed on the air chamber side of an inner liner portion of a tire tread for detecting vibrations of a moving tire, a windowing means for windowing the time-series waveform of tire vibrations detected by the tire vibration detecting unit in predetermined time widths and extracting time-series waveforms of tire vibrations from the respective time windows, a feature vector calculating means for calculating feature vectors, each having as components vibration levels in specific frequency bands or a function of the vibration levels, for the time-series waveforms extracted from the respective time windows, a storage means for storing a plurality of hidden Markov models, each having at least four states, structured in advance for different road surface conditions, a likelihood calculating means for calculating the likelihoods of the feature vectors for the plurality of hidden Markov models stored in the storage means, and a determining means for comparing the likelihoods calculated respectively for the plurality of hidden Markov models with one another and determining a road surface condition corresponding to the hidden Markov model showing the highest likelihood to be the condition of the road surface on which the tire is running.

An apparatus for determining a road surface condition having a structure as mentioned above can reliably implement the method for determining a road surface condition as described in the first aspect. Therefore, the apparatus can accurately set the time widths of the pre-leading-edge region and the post-trailing-edge region without detection of the peak positions or measurement of the wheel speed, thus improving the accuracy in determining a road surface condition.

It is to be understood that the foregoing summary of the invention does not necessarily recite all the features essential to the invention, and subcombinations of all these features are intended to be included in the invention.

BRIEF DESCRIPTION OF THE DRAWINGS

FIG. 1 is a functional block diagram showing a structure of a road surface condition determining apparatus in accordance with an embodiment of the present invention.
FIG. 2 is an illustration showing an example of the location of an acceleration sensor.
FIG. 3 is a diagram showing a time-series waveform of tire vibrations in the pre-leading-edge region, leading-edge region, pre-trailing-edge region, trailing-edge region, and post-trailing-edge region.
FIG. 4 is a diagram showing an example of a road-surface HMM.
FIG. 5 is a diagram showing road-surface HMMs used in calculating likelihoods.
FIG. 6 is a schematic representation of state transition series.
FIG. 7 is a flowchart showing a method for determining a road surface condition in accordance with an embodiment of the present invention.

FIG. 8 is a diagram showing examples of road-surface HMMs and an extra-road-surface HMM.

FIG. 9 is a diagram showing examples of combinations of intra-road-surface HMMs and extra-road-surface HMMs.

FIG. 10 is a diagram showing other examples of combinations of intra-road-surface HMMs and an extra-road-surface HMM.

FIG. 11 is a diagram showing other examples of combinations of intra-road-surface HMMs and an extra-road-surface HMM.

FIG. 12 is a table showing the results of determination of road surface conditions using road-surface HMMs.

DESCRIPTION OF THE PREFERRED EMBODIMENTS

The invention will now be described based on preferred embodiments which do not intend to limit the scope of the claims of the present invention but exemplify the invention. All of the features and the combinations thereof described in the embodiments are not necessarily essential to the invention.

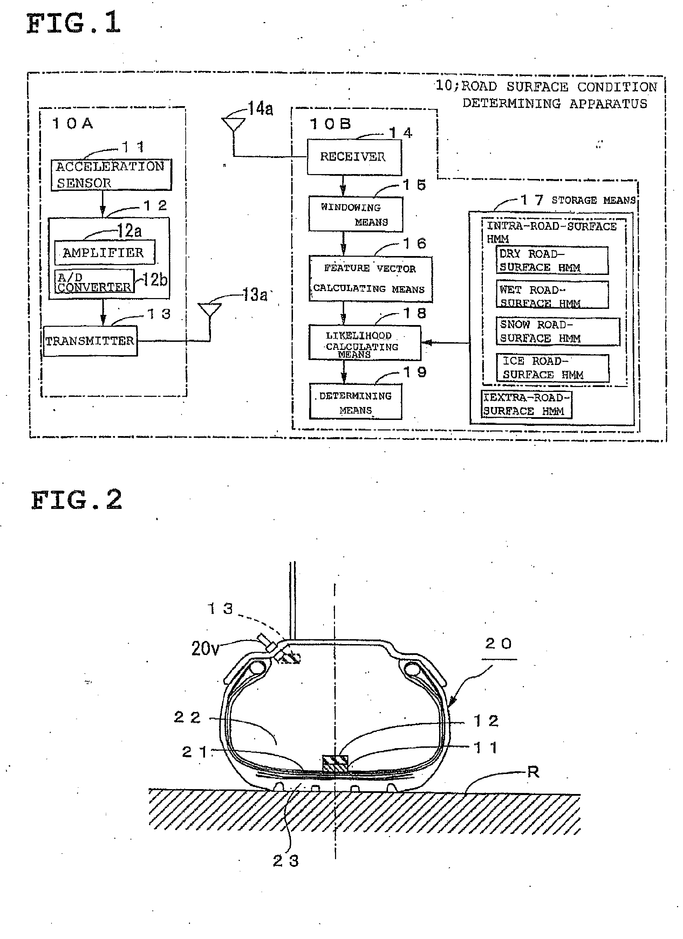

FIG. 1 is a functional block diagram showing a structure of a road surface condition determining apparatus 10. The road surface condition determining apparatus 10 comprises a sensor section 10A and an arithmetic processing section 10B.

The sensor section 10A includes an acceleration sensor 11, a signal input-output means 12, and a transmitter 13.

The acceleration sensor 11 is disposed integrally in a substantially middle portion on the tire air chamber 22 side of the inner liner portion 21 of a tire 20, as illustrated in FIG. 2, and detects the vibrations of the tire 20 inputted from a road surface R. The tread of the tire 20 is denoted by reference numeral 23.

The signal input-output means 12 includes an amplifier 12a that amplifies the output of the acceleration sensor 11 and an A/D converter 12b that converts an amplified signal into a digital signal. The signal input-output means 12 is disposed integrally with the acceleration sensor 11.

The transmitter 13, which is disposed near a valve 20v of the tire 20, is provided with an antenna 13a for transmitting the A/D-converted data of tire vibrations to the arithmetic processing section 10B installed on the vehicle body.

The arithmetic processing section 10B includes a receiver 14, a windowing means 15, a feature vector calculating means 16, a storage means 17, a likelihood calculating means 18, and a determining means 19.

The receiver 14, which is provided with an antenna 14a, receives with the antenna 14a a time-series waveform, which is the data of tire vibrations sent from the transmitter 13, and sends it to the windowing means 15.

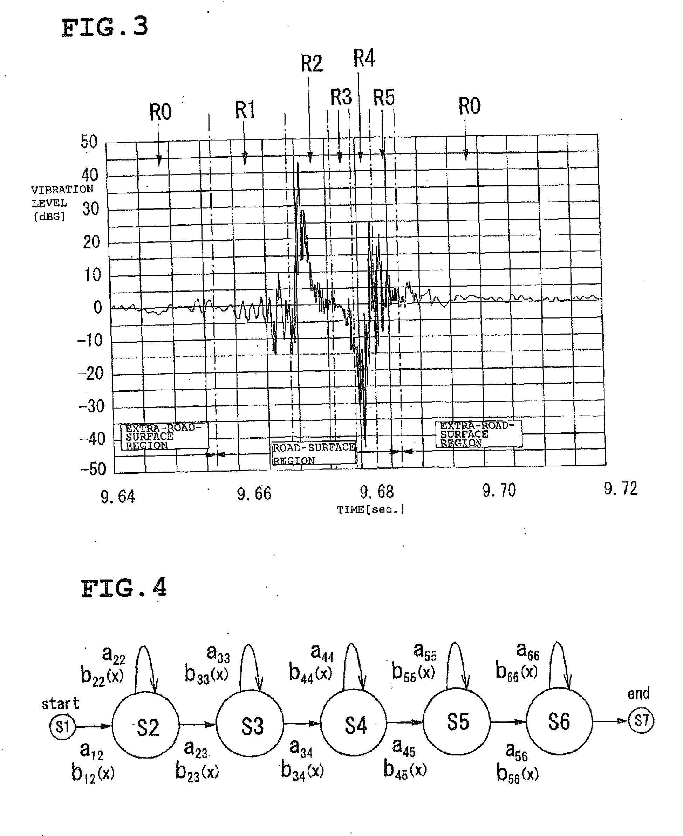

FIG. 3 is a diagram showing an example of a time-series waveform of tire vibrations. A time-series waveform of tire vibrations has marked peaks in the vicinities of the leading edge and the trailing edge of the contact patch of the tire. Also, in actuality, vibrations differing with the road surface condition appear in the region preceding the leading edge (pre-leading-edge region $R_1$) and the region following the trailing edge (post-trailing-edge region $R_5$) when the land portions of the tire 20 are not in contact with the road surface. Hereinbelow, the region from pre-leading-edge region $R_1$ to post-trailing-edge region $R_5$ will be referred to as the road-surface region, and the regions other than the road surface region as the extra-road-surface region. The road surface region consists of the pre-leading-edge region $R_1$, the leading-edge region $R_2$, the pre-trailing-edge region $R_3$, the trailing-edge region $R_4$, and the post-trailing-edge region $R_5$.

The extra-road-surface region is little affected by the road surface condition. That is, the extra-road-surface region has low vibration levels and contains little information on the road surface. This region is therefore called the non-informative region $R_0$ also.

The non-informative region may be set, for instance, as the region with lower vibration levels than a background level which is predetermined in relation to the time-series waveform of tire vibrations.

The windowing means 15 windows the above-described time-series waveform in predetermined time widths (time window widths), extracts time-series waveforms of tire vibrations from the respective time windows, and sends the data to the feature vector calculating means 16.

The feature vector calculating means 16 calculates feature vectors X for the respective time-series waveforms extracted from the time windows. In this embodiment, used as the feature vectors X are the vibration levels in specific frequency bands (power values of filtered waves) $x_k(t)$, which are each obtained by passing the time-series waveform of tire vibrations through the bandpass filters 161 to 166 of 0-0.5 kHz, 0.5-1 kHz, 1-2 kHz, 2-3 kHz, 3-4 kHz, and 4-5 kHz. These feature vectors X are therefore 6-dimensional.

The storage means 17 stores a plurality of hidden Markov models structured respectively for different road surface conditions (hereinafter referred to as road-surface HMMs). The road-surface HMMs include intra-road-surface HMMs (road) and extra-road-surface HMMs (silent). The intra-road-surface HMMs (road) are structured form a vibration waveform appearing in the road surface region of the time-series waveform of tire vibrations, whereas the extra-road-surface HMMs (silent) are structured from a vibration waveform appearing in the non-informative region.

As shown in FIG. 4, the road-surface HMMs have each seven states $S_1$ to $S_7$ corresponding to the time-series waveform of tire vibrations. And the states $S_1$ to $S_7$ are each comprised of two kinds of parameters, namely, the output

probability $b_{ij}(X)$ of the feature vector X and the transition probability $a_{ij}(X)$ between the states (i, j = 1 to 7).

In the present embodiment, a learning process is carried out for dividing the time-series waveform of tire vibrations into five states, namely, the five states $S_2$ to $S_6$ excepting the initial state $S_1$ and the final state $S_7$ of each road-surface HMM, and thereby the output probabilities $b_{ij}(X)$ of the feature vectors X and the transition probabilities $a_{ij}(X)$ between the states of each road-surface HMM are obtained.

The output probabilities $b_{ij}(X)$ are each the probability of the feature vector X being outputted when the state transits from state $S_i$ to state $S_j$. The output probabilities $b_{ij}(X)$ are each assumed to have a contaminated normal distribution.

The transition probabilities $a_{ij}(X)$ are each the probability of the state transiting from state $S_i$ to state $S_j$.

It should be noted that when the feature vectors X are k-dimensional, the output probabilities $b_{ij}$ are set respectively for k components $x_k$ of the feature vectors X.

In the present embodiment, the data of the time-series waveforms of tire vibrations which have been obtained by operating vehicles fitted with a tire 20 equipped with an acceleration sensor 11 on each of the dry, wet, snowy, and icy road surfaces were used as the data to be learned. And five road-surface HMMs, which are four intra-road-surface HMMs (road) of DRY road-surface HMM, WET road-surface HMM, SNOW road-surface HMM, and ICE road-surface HMM and an extra-road-surface HMM (silent), have been structured.

The intra-road-surface HMMs (road) and the extra-road-surface HMM (silent) are each an HMM having the seven states $S_1$ to $S_7$ including the initial state $S_1$ and the final state $S_7$.

The learning for the HMMs is done using a known technique such as EM algorithm, Baum-Welch algorithm, or forward-backward algorithm.

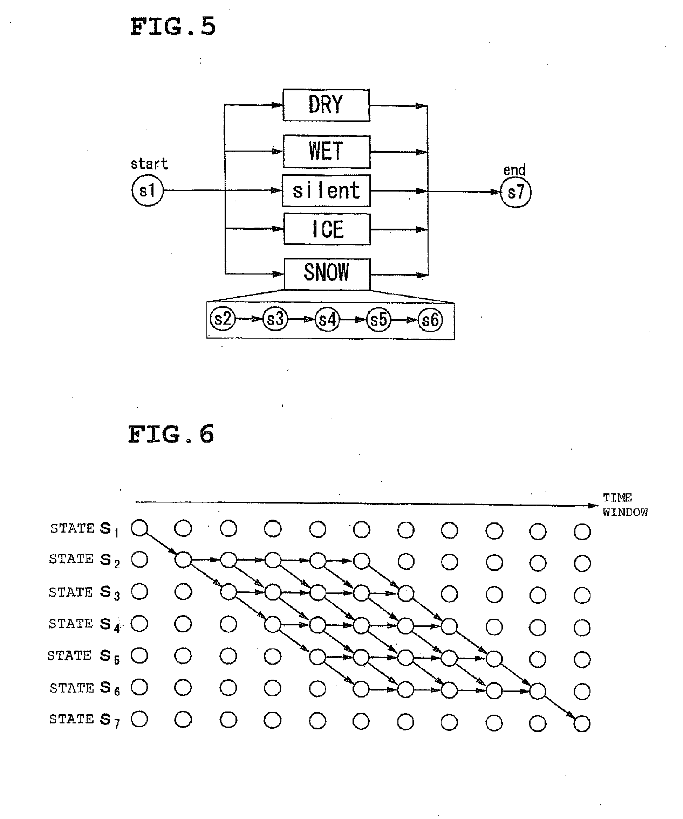

The likelihood calculating means 18 calculates the likelihoods of the feature vector X for each of a plurality (five here) of road-surface HMMs as shown in FIG. 5.

To obtain the likelihoods of the feature vectors X, the output probability $P(X_t)$ in each time window is first calculated, using the following equation:

$$P(X_t) = \prod_{s=1}^{S} \left[ \sum_{m=1}^{Ms} c_{jsm} N(X_{st} | \mu_{jsm}, \sigma_{jsm}) \right]$$

$$N(X | \mu, \sigma) = \frac{1}{\sqrt{(2\pi)^n |\sigma|}} \exp\left\{ -\frac{1}{2}(X - \mu)\sigma^{-1}(X - \mu)^T \right\}$$

where

X: data series
t: time
S: number of states
$M_s$: number of components of mixture gaussian distribution
$C_{jsm}$: mixing ratio of mth mixture component
$\mu$: mean vector of gaussian distribution
$\sigma$: variance-covariance matrix of gaussian distribution

The transition probability $\pi(X_t)$ can be represented by a 7x7 matrix since a road-surface HMM has seven states. As this transition probability $\pi(X_t)$, the transition probabilities $a_{ij}(X)$ between the states of the feature vectors X obtained through the learning for the road-surface HMMs may be used.

Then the occurrence probability $K(X_t)$ in each time window, which is the product of the output probability $P(X_t)$ calculated as above and the transition probability $\pi(X_t)$, is calculated, and the likelihood Z is obtained by multiplying the occurrence probabilities $K(X_t)$ in all time windows together. That is, the likelihood Z can be calculated as $\Pi P(X_t)$ times the transition probability $\pi(X_t)$. Or the likelihood Z may also be found by adding together the logarithms of the occurrence probabilities $K(X_t)$ calculated for all the time windows.

It should be noted that there are a plurality of routes for transition of a road-surface HMM from state $S_1$ to state $S_7$ (state transition series) as shown in FIG. 6. In other words, the likelihood Z varies with the state transition series for each of the road-surface HMMs.

In this embodiment, a state transition series $Z_M$, which has the highest likelihood Z, is derived using the well-known Viterbi algorithm. And this state transition series is determined to be the state transition series corresponding to the time-series waveform of detected tire vibrations, and the above likelihood $Z_M$ is chosen to be the Z of the applicable road-surface HMM.

The likelihood $Z_M$ is thus found for each of the road surface HMMs.

The determining means 19 compares the likelihoods of the plurality of hidden Markov models calculated by the likelihood calculating means 18 with one another and determines the road surface condition corresponding to the hidden Markov model showing the highest likelihood to be the condition of the road surface on which the tire is running.

That is, if the likelihood of the DRY road-surface HMM is denoted by Z1, that of the WET road-surface HMM by Z2, that of the SNOW road-surface HMM by Z3, that of the ICE road-surface HMM by Z4, and that of the extra-road-surface HMM by Z5, then the determining means 19 compares Z1 to Z5 with one another and determines the road surface condition corresponding to the road-surface HMM showing the highest likelihood to be the current condition of the road surface. Note that when the likelihood Z5 is the highest, the data is determined to be the data applicable outside the road surface, so that no determination of the road surface condition is performed.

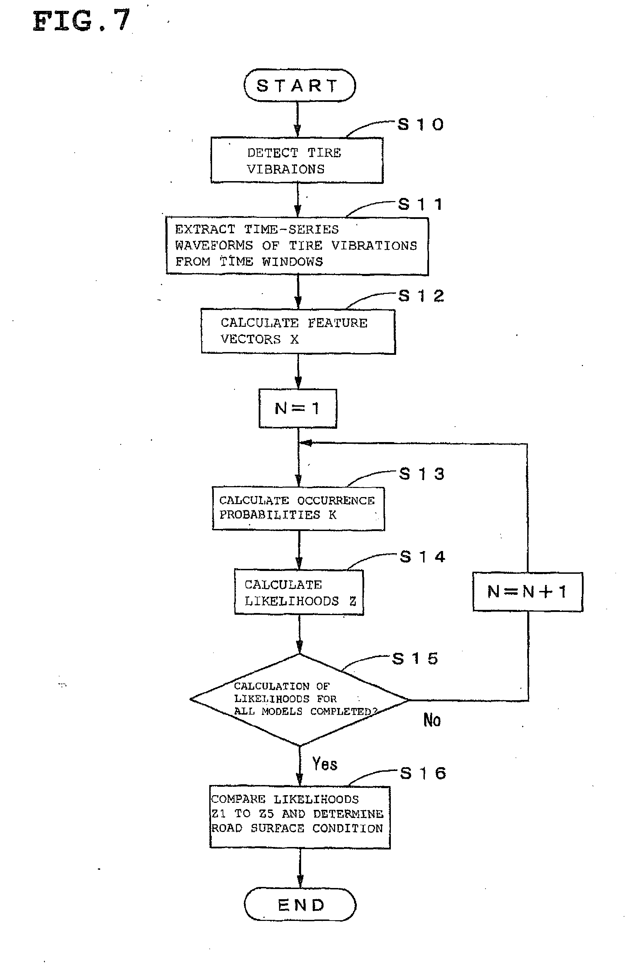

Now, with reference to the flowchart of FIG. 7, a description will be given of a method for determining the condition of a road surface on which a tire 20 is running, using a road surface condition determining apparatus 10. In the present embodiment, five models of DRY road-surface HMM, WET road-surface HMM, SNOW road-surface HMM, and ICE road-surface HMM as intra-road-surface HMMs and an extra-road-surface HMM are used.

First tire vibrations as inputted from a road surface R on which the tire 20 is running are detected by an acceleration sensor 11, and the data is sent to an arithmetic processing section 10B (S10).

Then the time-series waveform, which is the data on the tire vibrations, is windowed into predetermined time windows, and time-series waveforms of tire vibrations are extracted from the respective time windows (S11). After that, a feature vector $X = (x_1(t), x_2(t), x_3(t), x_4(t), x_5(t), x_6(t))$ is calculated for each of the time-series waveforms extracted from the respective time windows (S12).

In the present embodiment, the time window width is 2 msec.

As noted above, each of the components $x_1(t)$ to $x_6(t)$ of the feature vector X is the power value of filtered waves of the time-series waveform of tire vibrations.

After the calculation of the feature vectors X, the likelihoods of the feature vectors X for the plurality of the road-surface HMMs are calculated (S13 to S15) as shown in FIG. 5. The structure of each road-surface HMM is as shown in FIG. 4.

More specifically, the occurrence probability $K(X_t)$ in each time window, which is "output probability $P(X_t)$ x transition probability $\pi(X_t)$", is first calculated for the DRY road-surface HMM, which is the first model (S13). And the likelihood Z1 for the DRY road-surface HMM is obtained by multiplying the occurrence probabilities $K(X_t)$ of all the time windows together (S14).

Next, a determination is made as to whether the calculation of the likelihoods Z has been completed for all the models or not (S15). If the calculation is not completed, the procedure will go back to step 13, where the likelihood Z2 for the WET road-surface HMM, which is the next model, is calculated.

When the calculation of the likelihoods Z for all the five models has been completed, the procedure will advance to step 16, where the likelihoods Z1 to Z5 calculated for the respective road-surface HMMs are compared with one another, by which the road surface condition corresponding to the road-surface HMM showing the highest likelihood is determined to be the condition of the road surface on which the tire is now running.

As described above, in the present embodiment, a time-series waveform of tire vibrations detected by an acceleration sensor 11 is windowed by a windowing means 15. Time-series waveforms of tire vibrations are extracted from the respective time windows, feature vectors X are calculated therefor, and then the likelihoods Z for the respective road-surface models are calculated. Now the likelihoods Z1 to Z5 calculated for the respective road-surface HMMs are compared with one another, and the road surface condition corresponding to the road-surface HMM showing the highest likelihood is determined to be the condition of the road surface on which the tire is running. Therefore, the road surface condition can be determined without resorting to detection of the peak positions or measurement of the wheel speed.

Also, the method described features robustness against changes in tire size because the road surface condition can be determined irrespective of the contact patch length of a tire.

In the embodiment disclosed above, an acceleration sensor 11 is employed as the tire vibration detecting unit, but other means of vibration detection, such as a pressure sensor, may be used as the tire vibration detecting unit. Also, the acceleration sensor 11 may be located in other positions. For example, a pair of acceleration sensors 11 may be disposed at positions a predetermined distance axially apart from the tire width center, or the acceleration sensor 11 may be installed within a block. Also, the number of acceleration sensors 11 is not limited to one, but a plurality of acceleration sensors 11 may be disposed at a plurality of circumferential positions of a tire.

Also, in the foregoing embodiment, the power values $x_k(t)$ of filtered waves are used for the feature vector X, but the mean value $\mu_k$ and standard deviation $\sigma_k$ of the time-varying dispersion of the power values $x_k(t)$ of filtered waves may be used instead. The time-varying dispersion can be expressed as $\log[x_k^2(t) + x_{k-1}^2(t)]$. In this case, the dimensions of the feature vector x are: "number of frequency bands (6) x number of parameters (2) = 12".

Also, the Fourier coefficients, which are the vibration levels in specific frequency bands when a Fourier transform is performed on the time-series waveform of tire vibrations, or the cepstral coefficients thereof may be used for the feature vector X.

In the case of the cepstral coefficients, the waveform after the Fourier transform is assumed to be a spectral waveform, and a Fourier transform is again performed thereon to obtain them. Or the AR spectrum is assumed to be a waveform, and an AR coefficient is further derived to obtain them (LPCepstra). Thus, the shape of the spectrum can be characterized without being affected by the absolute levels, so that the use of the cepstral coefficients enhances the accuracy of determination higher than when the frequency spectrum obtained by a Fourier transform is used. In the case of LPCepstra, the feature vector X has 39 dimensions because "power value (1) + cepstral coefficient (12)" and their primary differences and secondary differences are used.

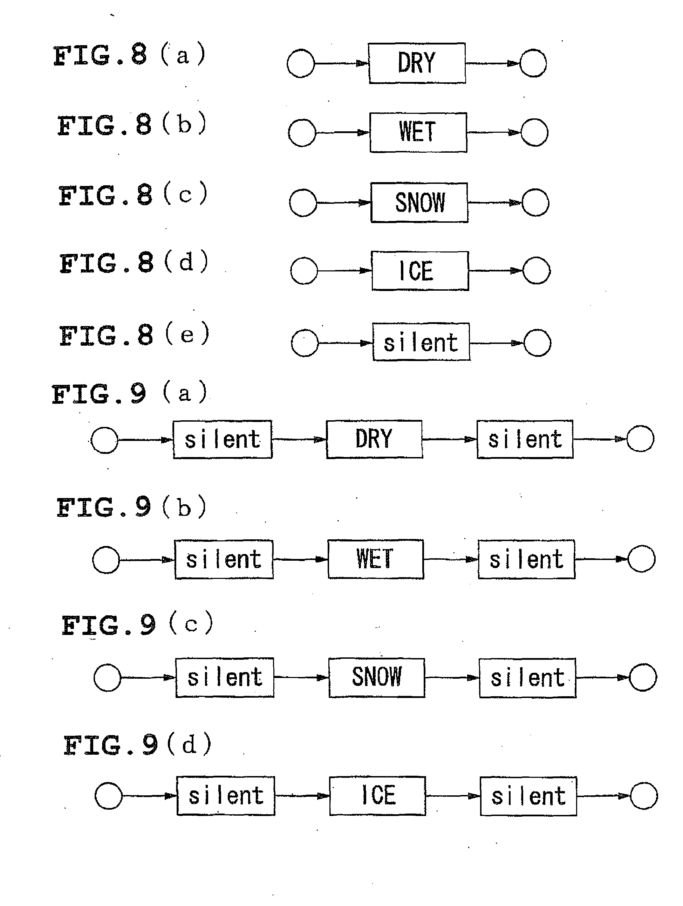

Also, in the foregoing embodiment, five road-surface HMMs (four intra-road-surface HMMs (road) and one extra-road-surface HMM (silent)), each having seven states ($S_1$ to $S_7$), are set as shown in FIGS. 8A to 8E. However, combinations of intra-road-surface HMM (road) and extra-road-surface HMM (silent) may be used also.

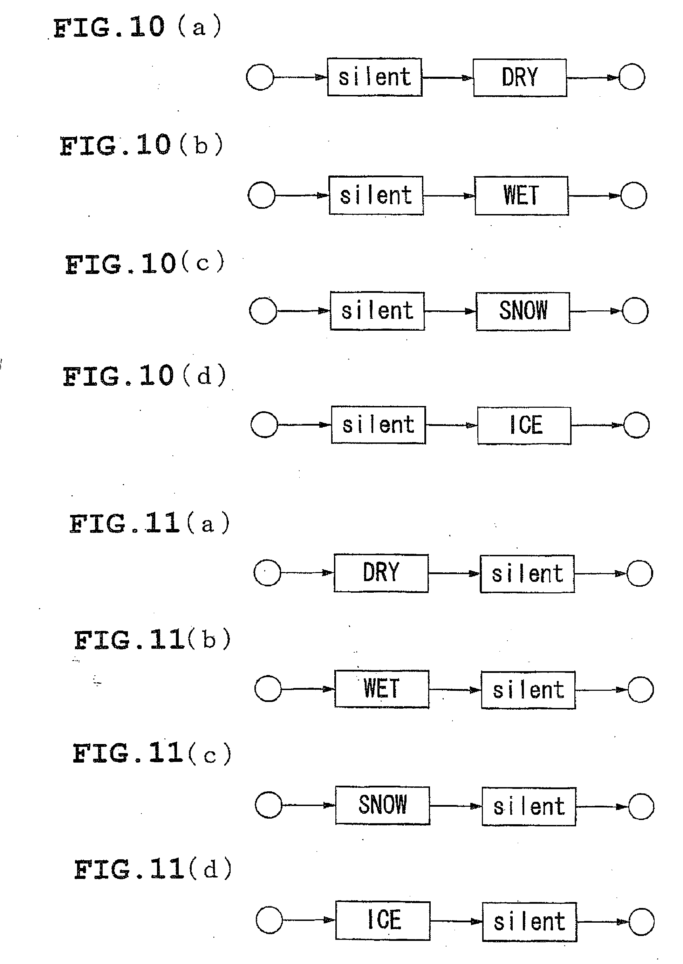

Such combinations may include not only silent-road-silent combinations as shown in FIGS. 9A to 9D, but also silent-road combinations as shown in FIGS. 10A to 10D and road-silent combinations as shown in FIGS. 11A to 11D.

There are four kinds of intra-road-surface HMMs (road), namely, the DRY road-surface HMM, WET road-surface HMM, SNOW road-surface HMM, and ICE road-surface HMM. With the sole extra-road-surface HMM (silent) shown in FIG. 8E added, there will be a total of 14 road-surface HMMs. Therefore, the accuracy of determination of a road surface condition will be further enhanced if a plurality or all of the 12 models shown in FIGS. 9 to 11 are added to the five models shown in FIGS. 8A to 8E.

[Example]

Four test vehicles A to D each fitted with a tire which had an acceleration sensor installed thereon were operated at speeds of 30 to 90 km/h on each of dry, wet, snowy, and icy roads. The time-series waveforms of tire vibrations were thus obtained, and the road surface conditions were determined, using the road-surface HMMs.

The test vehicle A was a front-wheel-drive vehicle whose tire size was 165/70R14.

The test vehicle B was a rear-wheel-drive vehicle whose tire size was 195/65R15.

The test vehicle C was a front-wheel-drive vehicle whose tire size was 195/60R15.

The test vehicle D was a front-wheel-drive vehicle whose tire size was 185/70R14.

Note that the tread pattern on all the tires used in the test was Bridgestone's BLIZZAK REV02.

The data used in the learning process was the data used with the test vehicle A.

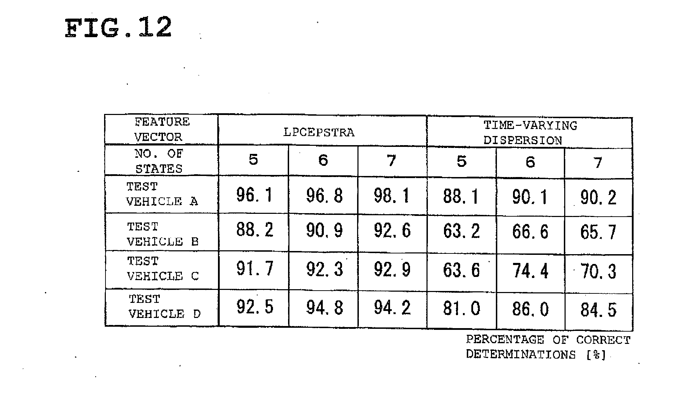

And the road surface conditions were determined, using 17 models as shown in FIGS. 8 to 11 as the road-surface HMMs. And the tests were made for two cases of the LPCepstra and the mean values and standard deviation $\sigma_k$ of the time-varying dispersion of the power value $x_k(t)$ of filtered waves used for the feature vector X. The results are shown in the table of FIG. 12. The results of determination are represented by the percentage of correct determinations.

As is evident from the table of FIG. 12, when the LPCepstra was used, the percentage of correct determinations was about 90% or higher with all the test tires. Also, when the mean value $\mu_k$ and standard deviation $\sigma_k$ of the time-varying dispersion of the power value $x_k(t)$ of filtered waves were used, the percentage of correct determinations was quite high at about 80% or above with the test vehicles A and D although it was not necessarily adequate with the vehicles B and C which were fitted with tires of large cross-sectional width. Therefore, it has been confirmed that the present invention realizes determination of a road surface condition with excellent accuracy.

According to the present invention, the time-series waveform of tire vibrations can be divided without resorting to detection of the peak positions or measurement of the wheel speed, and a road surface condition can be determined with robustness of the method against changes in tire size. Therefore, the accuracy of vehicular control, such as antilock braking system (ABS) and vehicle stability control (VSC), can be improved markedly.

| 10 | road surface condition determining apparatus |
|---|---|
| 10A | sensor section |
| 10B | arithmetic processing section |
| 11 | acceleration sensor |
| 12 | signal input-output means |
| 12a | amplifier |
| 12b | A/D converter |
| 13 | transmitter |

| 14 | receiver |
| 15 | windowing means |
| 16 | feature vector calculating means |
| 161-166 | bandpass filter |
| 17 | storage means |
| 18 | likelihood calculating means |
| 19 | determining means |
| 20 | tire |
| 21 | inner liner portion |
| 22 | tire air chamber |
| 23 | tread |
| R | road surface |

**Claims**

1. A method for determining a road surface condition from a vibration of a moving tire (20) detected by using a vibration detecting means (11) provided with a tire, the method comprising the steps of:

   detecting vibrations of a moving tire (20);
   extracting time-series waveforms of tire vibrations in predetermined time widths from the tire vibrations detected;
   calculating feature vectors for the time-series waveforms;
   calculating likelihoods of the feature vectors respectively for a plurality of hidden Markov models (HMMS) structured to represent predetermined road surface conditions;
   comparing the likelihoods calculated respectively for the plurality of hidden Markov models with one another; and
   determining a road surface condition corresponding to the hidden Markov model showing the highest likelihood to be the condition of the road surface on which the tire is running;
   wherein each of the feature vectors is vibration levels in specific frequency bands or a function of the vibration levels and wherein each of the hidden Markov models has at least four different states.

2. A method for determining a road surface condition according to claim 1, wherein the feature vector consists of one, two or more, or all of:

   vibration levels in specific frequency bands when a Fourier transform is performed on the time-series waveform,
   vibration levels in specific frequency bands obtained by passing the time-series waveform through bandpass filters (15),
   time-varying dispersions of the vibration levels in specific frequency bands, and
   frequency cepstral coefficients of the time-series waveform.

3. A method for determining a road surface condition according to claim 1 or claim 2, wherein each of the hidden Markov models for the respective road surface conditions has seven states.

4. A method for determining a road surface condition according to any of claims 1 to 3, wherein the hidden Markov models for the respective road surface conditions include an extra-road-surface hidden Markov model, structured from a vibration waveform which is a vibration waveform other than that of the contact patch and whose vibration level is lower than a predetermined background level, and intra-road-surface hidden Markov models, structured from vibration waveforms which are vibration waveforms of the contact patch or those before and after the contact patch and whose vibration level is equal to or higher than the predetermined background level, and wherein the extra-road-surface hidden Markov model is provided either before or after or both before and after the intra-road-surface hidden Markov models.

5. An apparatus for determining a road surface condition, from a vibration of a moving tire (20) detected by using a vibration detecting means (11) provided with a tire, the apparatus comprises:

   a windowing means (15) for windowing a time-series waveform of tire vibrations detected by the vibration detecting means (11) in predetermined time widths and extracting time-series waveforms of tire vibrations from the respective time windows;
   a feature vector calculating means (16) for calculating feature vectors, each having as components vibration levels in specific frequency bands or a function of the vibration levels, for the time-series waveforms extracted from the respective time windows;
a storage means (17) for storing a plurality of hidden Markov models, each having at least four states, structured in advance for different road surface conditions;
a likelihood calculating means (18) for calculating the likelihoods of the feature vectors for the plurality of hidden Markov models stored in the storage means; and
a determining means (19) for comparing the likelihoods calculated respectively for the plurality of hidden Markov models with one another and determining a road surface condition corresponding to the hidden Markov model showing the highest likelihood to be the condition of the road surface on which the tire is running, and;
the tire vibration detecting means (11) is disposed on the air chamber side of an inner liner portion (21) of the tire tread (23).

**Patentansprüche**

1. Verfahren zum Bestimmen eines Straßenoberflächenzustandes aus einer Schwingung eines sich bewegenden Reifens (20), die durch Verwenden eines mit einem Reifen bereitgestellten Schwingungsermittlungsmittels (11) ermittelt wird, wobei das Verfahren die Schritte umfasst:

Ermitteln von Schwingungen eines sich bewegenden Reifens (20);
Extrahieren von Zeitreihen-Wellenformen von Reifenschwingungen in vorbestimmten Zeitbreiten aus den ermittelten Reifenschwingungen;
Berechnen von Merkmalsvektoren für die Zeitreihen-Wellenformen;
Berechnen von Wahrscheinlichkeiten der Merkmalsvektoren, und zwar jeweils für eine Vielzahl von Hidden-Markov-Modellen (HMM), die dafür strukturiert sind, vorbestimmte Straßenoberflächenzustände zu repräsentieren;
miteinander Vergleichen der jeweils für die Vielzahl von Hidden-Markov-Modellen berechneten Wahrscheinlichkeiten; und
Bestimmen eines Straßenoberflächenzustandes, der demjenigen Hidden-Markov-Modell entspricht, das die höchste Wahrscheinlichkeit zeigt, der Zustand derjenigen Straßenoberfläche zu sein, auf welcher der Reifen rollt; worin es sich bei jedem der Merkmalsvektoren um Schwingungspegel in spezifischen Frequenzbändern oder um eine Funktion der Schwingungspegel handelt und worin jedes der Hidden-Markov-Modelle mindestens vier unterschiedliche Zustände hat.

2. Verfahren zum Bestimmen eines Straßenoberflächenzustandes nach Anspruch 1, worin der Merkmalsvektor aus einem, zwei oder mehr oder allem von Folgendem besteht:

Schwingungspegel in spezifischen Frequenzbändern, wenn eine Fouriertransformation auf die Zeitreihen-Wellenform angewendet wird,
Schwingungspegel in spezifischen Frequenzbändern, die durch Hindurchleiten der Zeitreihen-Wellenform durch Bandpassfilter (15) erlangt werden,
zeitlich veränderliche Dispersionen der Schwingungspegel in spezifischen Frequenzbändern, und
Frequenzcepstrum-Koeffizienten der Zeitreihen-Wellenform.

3. Verfahren zum Bestimmen eines Straßenoberflächenzustandes nach Anspruch 1 oder Anspruch 2, worin jedes der Hidden-Markov-Modelle für die jeweiligen Straßenoberflächenzustände sieben Zustände hat.

4. Verfahren zum Bestimmen eines Straßenoberflächenzustandes nach einem der Ansprüche 1 bis 3, worin die Hidden-Markov-Modelle für die jeweiligen Straßenoberflächenzustände einschließen: ein Hidden-Markov-Modell außerhalb der Straßenoberfläche, das aus einer Schwingungswellenform strukturiert wird, bei dem es sich um eine andere Schwingungswellenform als jene der Reifenaufstandsfläche handelt und deren Schwingungspegel niedriger als ein vorbestimmter Hintergrundpegel ist, und Hidden-Markov-Modelle innerhalb der Straßenoberfläche, die aus Schwingungswellenformen strukturiert werden, bei denen es sich um Schwingungswellenformen der Reifenaufstandsfläche oder um jene vor und hinter der Reifenaufstandsfläche handelt und deren Schwingungspegel gleich dem oder höher als der vorbestimmte Hintergrundpegel ist; und worin das Hidden-Markov-Modell außerhalb der Straßenoberfläche entweder vor oder nach oder sowohl vor als auch nach den Hidden-Markov-Modellen innerhalb der Straßenoberfläche bereitgestellt wird.

**5.** Vorrichtung zum Bestimmen eines Straßenoberflächenzustandes aus einer Schwingung eines sich bewegenden Reifens (20), die durch Verwenden eines mit einem Reifen bereitgestellten Schwingungsermittlungsmittels (11) ermittelt wird, wobei die Vorrichtung umfasst:

ein Fensterungsmittel (15) zum Fenstern einer Zeitreihen-Wellenform von durch das Schwingungsermittlungsmittel (11) ermittelten Reifenschwingungen in vorbestimmten Zeitbreiten und zum Extrahieren von Zeitreihen- Wellenformen von Reifenschwingungen aus den jeweiligen Zeitfenster,
ein Merkmalsvektor-Berechnungsmittel (16) zum Berechnen von Merkmalsvektoren für die aus den jeweiligen Zeitfenstern extrahierten Zeitreihen-Wellenformen, die als Komponenten jeweils Schwingungspegel in spezifischen Frequenzbändern oder eine Funktion der Schwingungspegel haben;
ein Speichermittel (17) zum Speichern einer Vielzahl von Hidden-Markov-Modellen, deren jedes mindestens vier Zustände hat und die im Voraus für unterschiedliche Straßenoberflächenzustände strukturiert wurden;
ein Wahrscheinlichkeitsberechnungsmittel (18) zum Berechnen der Wahrscheinlichkeiten der Merkmalsvektoren für die im Speichermittel gespeicherte Vielzahl von Hidden-Markov-Modellen; und
ein Bestimmungsmittel (19) zum miteinander Vergleichen der jeweils für die Vielzahl von Hidden-Markov-Modellen berechneten Wahrscheinlichkeiten und Bestimmen eines Straßenoberflächenzustandes, der demjenigen Hidden-Markov-Modell entspricht, das die höchste Wahrscheinlichkeit zeigt, der Zustand derjenigen Straßenoberfläche zu sein, auf welcher der Reifen rollt; und
wobei das Schwingungsermittlungsmittel (11) auf der Luftkammerseite eines Kappenabschnitts (21) der Reifenlauffläche (23) angeordnet ist.

## Revendications

**1.** Procédé de détermination d'un état de la surface d'une route sur la base d'une vibration d'un bandage pneumatique en mouvement (20), détectée par l'intermédiaire d'un moyen de détection des vibrations (11) équipé d'un bandage pneumatique, le procédé comprenant les étapes ci-dessous :

détection des vibrations d'un bandage pneumatique en mouvement (20) ;
extraction de formes d'onde de séries chronologiques des vibrations du bandage pneumatique dans des largeurs de temps prédéterminées sur la base des vibrations détectées du bandage pneumatique ;
calcul des vecteurs de caractéristiques pour les formes d'onde de séries chronologiques ;
calcul des probabilités des vecteurs de caractéristiques, respectivement pour plusieurs modèles de Markov cachés (HMMS), structurés de sorte à représenter des conditions prédéterminées de la surface de la route ;
comparaison des probabilités calculées respectivement pour les plusieurs modèles de Markov cachés les unes avec les autres; et
détermination d'un état de la surface d'une route correspondant au modèle de Markov caché présentant la plus haute probabilité de correspondre à l'état de la surface de la route sur laquelle le bandage pneumatique roule ;
dans lequel chacun des vecteurs de caractéristiques constitue des niveaux des vibrations dans des bandes de fréquences spécifiques ou une fonction des niveaux des vibrations, chacun des modèles de Markov cachés présentant au moins quatre états différents.

**2.** Procédé de détermination d'un état de la surface d'une route selon la revendication 1, dans lequel le vecteur de caractéristiques est constitué par un, deux ou plus, ou par l'ensemble des paramètres ci-dessous :

des niveaux des vibrations dans des bandes de fréquence spécifiques lors de l'exécution d'une transformée de Fourier sur la forme d'onde de séries chronologiques ;
des niveaux des vibrations dans des bandes de fréquence spécifiques obtenues par passage de la forme d'onde de séries chronologiques à travers des filtres passe-bande (15) ;
des dispersions à variation dans le temps des niveaux des vibrations dans des bandes de fréquence spécifiques ; et
des coefficients cepstraux de fréquence de la forme d'onde de séries chronologiques.

**3.** Procédé de détermination de l'état de la surface d'une route selon la revendication 1 ou 2, dans lequel chacun des modèles de Markov cachés pour les états respectifs de la surface de la route présente sept états.

**4.** Procédé de détermination de l'état de la surface d'une route selon l'une quelconque des revendications 1 à 3, dans lequel les modèles de Markov cachés pour les états respectifs de la route englobent un modèle de Markov caché externe à la surface de la route, structuré sur la base d'une forme d'onde de vibrations constituant une forme d'onde de vibrations autre que celle de la surface de contact et dont le niveau des vibrations est inférieur à un niveau d'arrière-plan prédéterminé, et des modèles de Markov cachés internes à la surface de la route, structurés sur la base de formes d'onde de vibrations constituant des formes d'onde de vibrations de la surface de contact ou des parties devant et derrière la surface de contact, et dont le niveau des vibrations est égal ou supérieur au niveau d'arrière-plan prédéterminé, et dans lequel le modèle de Markov caché externe à la surface de la route est établi avant ou après ou avant et après les modèles de Markov cachés internes à la surface de la route.

5. Appareil pour déterminer un état de la surface d'une route, sur la base d'une vibration d'un bandage pneumatique en mouvement (20), détectée par l'intermédiaire d'un moyen de détection des vibrations (11) fourni avec un bandage pneumatique, l'appareil comprenant :

un moyen de fenêtrage (15) pour le fenêtrage d'une forme d'onde de séries chronologiques des vibrations du bandage pneumatique détectées par le moyen de détection des vibrations (11) dans des largeurs de temps prédéterminées, et pour extraire des formes d'onde de séries chronologiques des vibrations du bandage pneumatique sur la base des fenêtres de temps respectives ;
un moyen de calcul du vecteur des caractéristiques (16), pour calculer des vecteurs des caractéristiques, comportant chacun comme composants des niveaux des vibrations dans des bandes de fréquence spécifiques ou une fonction des niveaux des vibrations, pour les formes d'onde de séries chronologiques extraites des fenêtres de temps respectives ;
un moyen de stockage (17), pour stocker plusieurs modèles de Markov cachés, présentant chacun au moins quatre états, structurés d'avance pour différentes conditions de la surface de la route ;
un moyen de calcul des probabilités (18), pour calculer les probabilités des vecteurs des caractéristiques pour les plusieurs modèles de Markov cachés stockés dans le moyen de stockage ; et
un moyen de détermination (19), pour comparer respectivement les probabilités calculées respectivement pour les plusieurs modèles de Markov cachés les unes avec les autres et déterminer un état de la surface d'une route correspondant au modèle de Markov caché présentant la plus forte probabilité de correspondre à l'état de la surface de la route sur laquelle le bandage pneumatique roule ; et
le moyen de détection des vibrations du bandage pneumatique (11), agencé sur le côté de la chambre à air d'une partie de gomme intérieure (21) de la bande de roulement du bandage pneumatique (23).

# FIG.1

10;ROAD SURFACE CONDITION
DETERMINING APPARATUS

10A

ACCELERATION
SENSOR — 11

12

AMPLIFIER — 12a

A/D
CONVERTER — 12b

TRANSMITTER — 13

13a

14a

RECEIVER — 14

WINDOWING
MEANS — 15

FEATURE VECTOR
CALCULATING MEANS — 16

LIKELIHOOD
CALCULATING
MEANS — 18

DETERMINING
MEANS — 19

17 STORAGE MEANS

INTRA-ROAD-SURFACE
HMM

DRY ROAD-
SURFACE HMM

WET ROAD-
SURFACE HMM

SNOW ROAD-
SURFACE HMM

ICE ROAD-
SURFACE HMM

EXTRA-ROAD-
SURFACE HMM

# FIG.2

# FIG.3

# FIG.4

FIG.5

FIG.6

# FIG.7

```
        ( START )
           │
           ▼
   ┌─────────────────┐  ⌒S10
   │  DETECT TIRE    │
   │   VIBRAIONS     │
   └─────────────────┘
           │
           ▼
 ┌───────────────────────┐  ⌒S11
 │ EXTRACT TIME-SERIES   │
 │ WAVEFORMS OF TIRE     │
 │ VIBRATIONS FROM TIME  │
 │ WINDOWS               │
 └───────────────────────┘
           │
           ▼
   ┌─────────────────┐  ⌒S12
   │ CALCULATE       │
   │ FEATURE         │
   │ VECTORS X       │
   └─────────────────┘
           │
           ▼
      ┌─────────┐
      │  N = 1  │
      └─────────┘
           │
           ▼
   ┌─────────────────┐  ⌒S13
   │ CALCULATE       │
   │ OCCURRENCE      │
   │ PROBABILITIES K │
   └─────────────────┘
           │
           ▼                        ┌───────────┐
   ┌─────────────────┐  ⌒S14        │ N = N + 1 │
   │ CALCULATE       │              └───────────┘
   │ LIKELIHOODS Z   │
   └─────────────────┘
           │
           ▼
        ╱─────────╲  ⌒S15
       ╱ CALCULATION╲
      ╱  OF          ╲        No
      ╲ LIKELIHOODS   ╱─────────────►
       ╲ FOR ALL     ╱
        ╲ MODELS    ╱
         ╲COMPLETED?╱
           │
          Yes
           ▼
 ┌───────────────────────┐  ⌒S16
 │ COMPARE LIKELIHOODS   │
 │ Z1 TO Z5 AND DETERMINE│
 │ ROAD SURFACE CONDITION│
 └───────────────────────┘
           │
           ▼
        (  END  )
```

FIG.8 (a)

○ → | DRY | → ○

FIG.8 (b)

○ → | WET | → ○

FIG.8 (c)

○ → | SNOW | → ○

FIG.8 (d)

○ → | ICE | → ○

FIG.8 (e)

○ → | silent | → ○

FIG.9 (a)

○ → | silent | → | DRY | → | silent | → ○

FIG.9 (b)

○ → | silent | → | WET | → | silent | → ○

FIG.9 (c)

○ → | silent | → | SNOW | → | silent | → ○

FIG.9 (d)

○ → | silent | → | ICE | → | silent | → ○

FIG.10(a)

○ → | silent | → | DRY | → ○

FIG.10(b)

○ → | silent | → | WET | → ○

FIG.10(c)

○ → | silent | → | SNOW | → ○

FIG.10(d)

○ → | silent | → | ICE | → ○

FIG.11(a)

○ → | DRY | → | silent | → ○

FIG.11(b)

○ → | WET | → | silent | → ○

FIG.11(c)

○ → | SNOW | → | silent | → ○

FIG.11(d)

○ → | ICE | → | silent | → ○

# FIG.12

| FEATURE VECTOR | LPCEPSTRA | | | TIME-VARYING DISPERSION | | |
|---|---|---|---|---|---|---|
| NO. OF STATES | 5 | 6 | 7 | 5 | 6 | 7 |
| TEST VEHICLE A | 96.1 | 96.8 | 98.1 | 88.1 | 90.1 | 90.2 |
| TEST VEHICLE B | 88.2 | 90.9 | 92.6 | 63.2 | 66.6 | 65.7 |
| TEST VEHICLE C | 91.7 | 92.3 | 92.9 | 63.6 | 74.4 | 70.3 |
| TEST VEHICLE D | 92.5 | 94.8 | 94.2 | 81.0 | 86.0 | 84.5 |

PERCENTAGE OF CORRECT
DETERMINATIONS [%]

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006135090 A1

- DE 10320809